# EUROPÄISCHE PATENTSCHRIFT

(11) **EP 0 017 110 B1**
(45) Veröffentlichungstag und Bekanntmachung des Hinweises auf die Patenterteilung: **04.05.1983**
(21) Anmeldenummer: 80101519.9
(22) Anmeldetag: 22.03.1980
(51) Int. Cl.: C07C 103/48, A01N 37/46

(54) **N-Dichloracetyl-N-phenyl-alenin(thiol)ester, Verfahren zu ihrer Herstellung sowie ihre Verwendung als Fungizide**
N-dichloroacetyl-N-phenyl-alanin(thiol) esters, process for their preparation and their use as fungicides
N-Dichloracétyl-N-phényl-alanin(thiol)esters, procédé pour les préparer et leur utilisation comme fongicides

(30) Priorität: 04.04.1979 DE 2913459
(43) Veröffentlichungstag der Anmeldung: 15.10.1980
(73) Patentinhaber: BAYER AG, 51368 Leverkusen (DE)
(72) Erfinder: Lunkenheimer, Winfried, Dr., D-5600 Wuppertal 1 (DE); Brandes, Wilhelm, Dr., D-5623 Leichlingen (DE)

## Beschreibung

Die vorliegende Erfindung betrifft neue N-Dichloracetyl-N-phenyl-alanin(thiol)ester, ein Verfahren zu ihrer Herstellung sowie ihre Verwendung als Fungizide.

Es ist bereits bekanntgeworden, daß Halogenacetanilide, wie beispielsweise N-Chloracetyl-N-(2,6-dialkyl- bzw. 2,6-dihalogenphenyl)-alaninalkylester mit gutem Erfolg zur Bekämpfung von pilzlichen Pflanzenkrankheiten eingesetzt werden können (vgl. DE-OS 2 350 944, DE-OS 2 212 268 und DE-OS 2513730). Deren Wirkung ist jedoch, insbesondere bei niedrigen Aufwandmengen und -konzentrationen, insbesondere auch bei der Bekämpfung von Phytophthora-Arten, nicht immer ganz befriedigend.

Es wurden neue N-Dichloracetyl-N-phenyl-alanin(thiol)ester der allgemeinen Formel 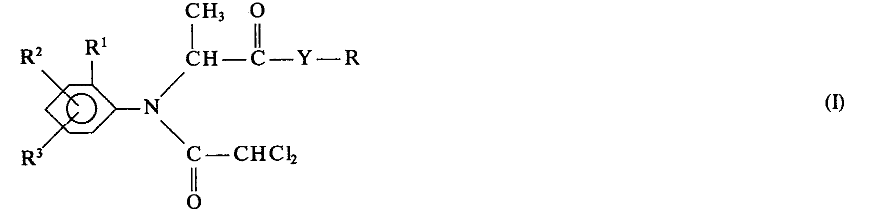 in welcher
R für Alkyl, Hydroxyalkyl, Cyanalkyl, Alkenyl, Alkinyl, Halogenalkyl, Cycloalkyl, Cycloalkylalkyl, Alkoxyalkyl, Alkoxyalkoxyalkyl, Acyloxyalkyl, Alkylthioalkyl, Alkylsulfinylalkyl, Alkylsulfonylalkyl, Dialkylaminoalkyl oder gegebenenfalls durch Halogen, Cyano, Nitro, Alkyl sowie Halogenalkyl substituiertes Aralkyl steht,
R¹ für Wasserstoff, Alkyl, Alkoxy oder Halogen steht,
R² für Wasserstoff, Alkyl, Alkoxy oder Halogen steht,
R³ für Wasserstoff oder Alkyl steht und
Y für Sauerstoff oder Schwefel steht,

gefunden.

Weiterhin wurde gefunden, daß man die N-Dichloracetyl-N-phenyl-alanin(thiol)ester der Formel (I) erhält, wenn man
a) N-Phenyl-alanin(thiol)ester der Formel 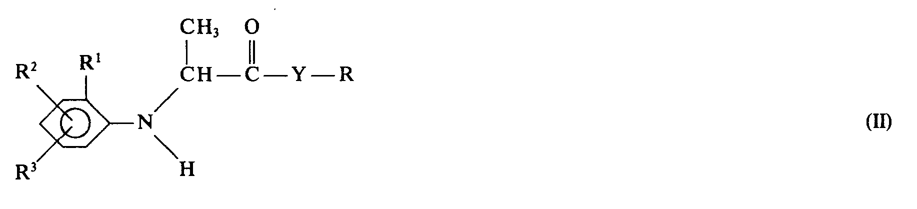 in welcher
   R, R¹, R², R³ und Y die oben angegebene Bedeutung haben,

   mit Dichloressigsäurechloriden oder -bromiden bzw. -anhydriden der Formeln 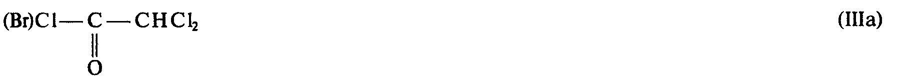 bzw. 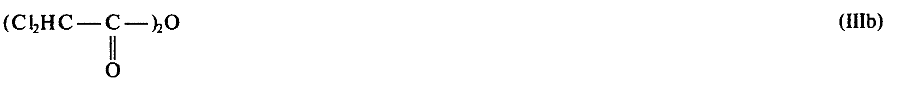 in Gegenwart eines Verdünnungsmittels und gegebenenfalls in Gegenwart eines Säurebindemittels umsetzt, oder
b) N-Dichloracetyl-N-phenyl-alanine der Formel 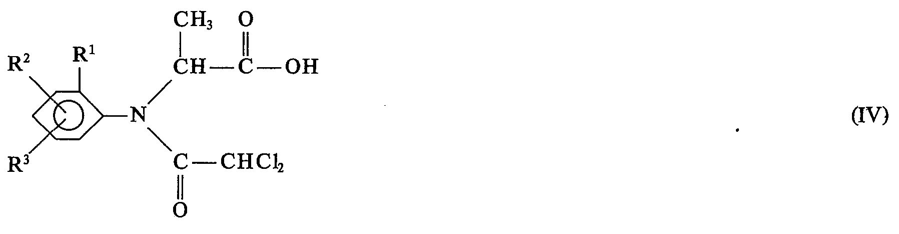 in welcher
   R¹, R² und R³ die oben angegebene Bedeutung haben,

   mit Alkoholen bzw. Thiolen der Formel 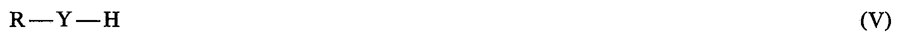 in welcher
   R und Y die oben angegebene Bedeutung haben,

   in Gegenwart eines Kondensationsmittels und gegebenenfalls in Gegenwart eines Verdünnungsmittels umsetzt, oder
c) N-Dichloracetyl-N-phenyl-alaninchloride der Formel 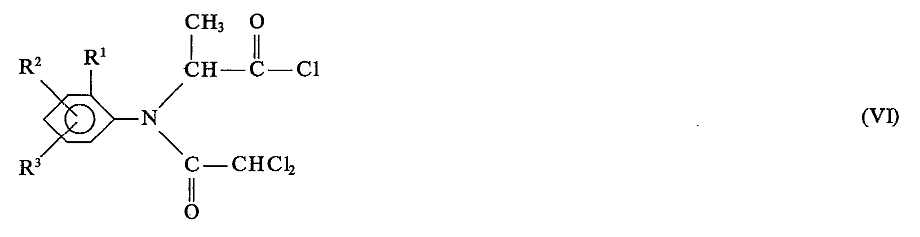 in welcher
   R¹, R² und R³ die oben angegebene Bedeutung haben,

   mit Alkoholen bzw. Thiolen der Formel (V) in Gegenwart eines Verdünnungsmittels und gegebenenfalls in Gegenwart einer Base umsetzt.

Außerdem wurde gefunden, daß die neuen N-Dichloracetyl-N-phenyl-alanin(thiol)ester der Formel (I) starke fungizide Eigenschaften aufweisen.

Überraschenderweise zeigen die erfindungsgemäßen N-Dichloracetyl-N-phenyl-alanin(thiol)ester eine erheblich höhere Wirkung, insbesondere gegen Phytophthora, als die aus dem Stand der Technik bekannten N-Chloracetyl-N-(2,6-dialkylphenyl)-alaninalkylester, welche chemisch und wirkungsmäßig naheliegende Verbindungen sind. Die erfindungsgemäßen Wirkstoffe stellen somit eine Bereicherung der Technik dar.

Die erfindungsgemäßen N-Dichloracetyl-N-phenyl-alanin(thiol)ester sind durch die Formel (I) allgemein definiert. In dieser Formel steht R vorzugsweise für geradkettiges oder verzweigtes Alkyl mit 1 bis 6 Kohlenstoffatomen; für Hydroxy- und Cyanalkyl mit jeweils 1 bis 4 Kohlenstoffatomen im Alkylteil; für Alkenyl und Alkinyl mit 2 bis 4 Kohlenstoffatomen und für Halogenalkyl mit 1 bis 4 Kohlenstoff- und bis zu 5 Halogenatomen, insbesondere mit bis zu 2 Kohlenstoff- und bis zu 3 gleichen oder verschiedenen Halogenatomen, wobei als Halogene insbesondere Fluor und Chlor stehen. R steht weiterhin vorzugsweise für Cycloalkylalkyl mit 3 bis 7 Kohlenstoffatomen im Cycloalkylteil und 1 bis 4 Kohlenstoffatomen im Alkylteil; für Alkoxyalkyl, Alkoxyalkoxyalkyl, Alkylthioalkyl, Alkylsulfinylalkyl, Alkylsulfonylalkyl und Dialkylaminoalkyl mit 1 bis 4 Kohlenstoffatomen in jedem Alkylteil sowie vorzugsweise für Acyloxyalkyl mit 1 bis 4 Kohlenstoffatomen im Alkylteil, wobei im Acylteil mit der allgemeinen Formel R⁴⁻CO- der Rest R⁴ vorzugsweise bedeutet: Alkyl mit 1 bis 4 Kohlenstoffatomen; Halogenalkyl mit 1 bis 4 Kohlenstoff- und bis zu 5 Halogenatomen, insbesondere mit bis zu 2 Kohlenstoff- und bis zu 3 gleichen oder verschiedenen Halogenatomen, wobei als Halogene insbesondere Fluor und Chlor stehen; und gegebenenfalls im Arylteil substituiertes Aryl oder Arylalkyl mit 6 bis 10 Kohlenstoffatomen im Arylteil und 1 bis 4 Kohlenstoffatomen im Alkylteil, wie insbesondere Phenyl oder Benzyl, wobei als Substituenten vorzugsweise in Frage kommen: Halogen, insbesondere Fluor, Chlor und Brom; Cyano, Nitro, Alkyl mit 1 bis 2 Kohlenstoffatomen sowie Halogenalkyl mit bis zu 2 Kohlenstoff- und bis zu 3 gleichen oder verschiedenen Halogenatomen, wobei als Halogene insbesondere Fluor oder Chlor stehen, beispielshaft sei Trifluormethyl genannt. R steht außerdem vorzugsweise für gegebenenfalls im Arylteil substituiertes Aralkyl mit 6 bis 10 Kohlenstoffatomen im Arylteil, insbesondere Phenyl, und 1 bis 4 Kohlenstoffatomen im Alkylteil, wobei als Substituenten vorzugsweise in Frage kommen: Halogen, insbesondere Fluor, Chlor und Brom; Cyano, Nitro, Alkyl mit 1 oder 2 Kohlenstoffatomen sowie Halogenalkyl mit bis zu 2 Kohlenstoff-und bis zu 3 gleichen oder verschiedenen Halogenatomen, wobei als Halogene insbesondere Fluor und Chlor stehen, beispielhaft sei Trifluormethyl genannt. R¹ und R² stehen vorzugsweise für Wasserstoff, geradkettiges oder verzweigtes Alkyl oder Alkoxy mit 1 bis 4 Kohlenstoffatomen sowie für Halogen, insbesondere Fluor, Chlor oder Brom. R³ steht vorzugsweise für Wasserstoff und geradkettiges oder verzweigtes Alkyl mit 1 bis 4 Kohlenstoffatomen. Y steht vorzugsweise für Sauerstoff oder Schwefel.

Ganz besonders bevorzugt sind diejenigen Verbindungen der Formel (I), in denen R für Methyl, Ethyl, n-Propyl, Isopropyl, n-Butyl, Isobutyl, sek.-Butyl, tert.-Butyl, Hydroxyethyl, Cyanmethyl, Allyl, Propargyl, Chlorethyl, Cyclopropyl, Cyclopropylmethyl. Cyclohexyl, Cyclohexylmethyl, Methoxyethyl, Ethoxyethyl, Methylthioethyl, Ethylthioethyl, Methoxyethoxyethyl, Chloracetoxyethyl, Methylsulfinylethyl, Ethylsulfinylethyl, Methylsulfonylethyl, Ethylsulfonylethyl, gegebenenfalls durch Chlor, Methyl und/oder Ethyl substituiertes Benzyl sowie Dimethylaminoethyl oder Diethylaminoethyl steht; R¹, R² und R³ gleich oder verschieden sind, und für Wasserstoff, Methyl, Ethyl, n-Propyl, Isopropyl, n-Butyl, Isobutyl, sek.-Butyl oder tert.-Butyl stehen; R¹ und R² außerdem auch für Methoxy, Ethoxy, Isopropoxy, Fluor, Chlor oder Brom stehen; und Y die in der Erfindungsdefinition angegebene Bedeutung hat.

Im einzelnen seien außer den bei den Herstellungsbeispielen genannten Verbindungen die folgenden Verbindungen der allgemeinen Formel (I) genannt:

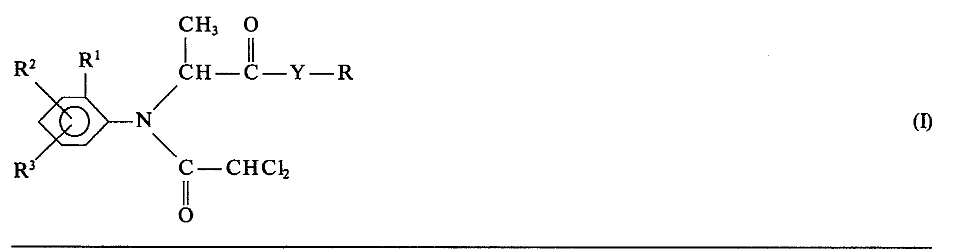

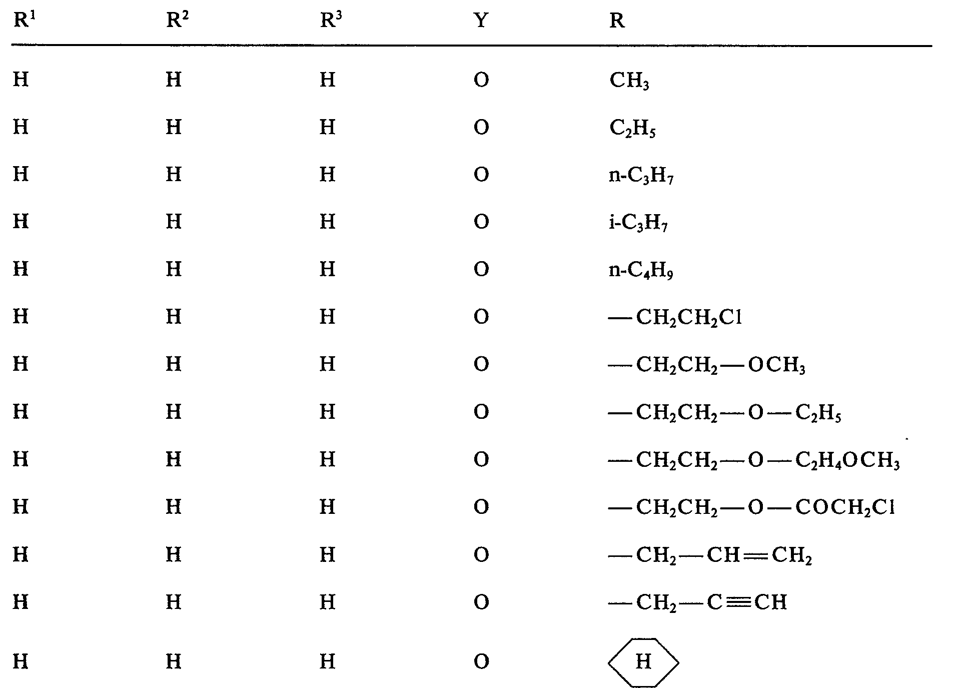

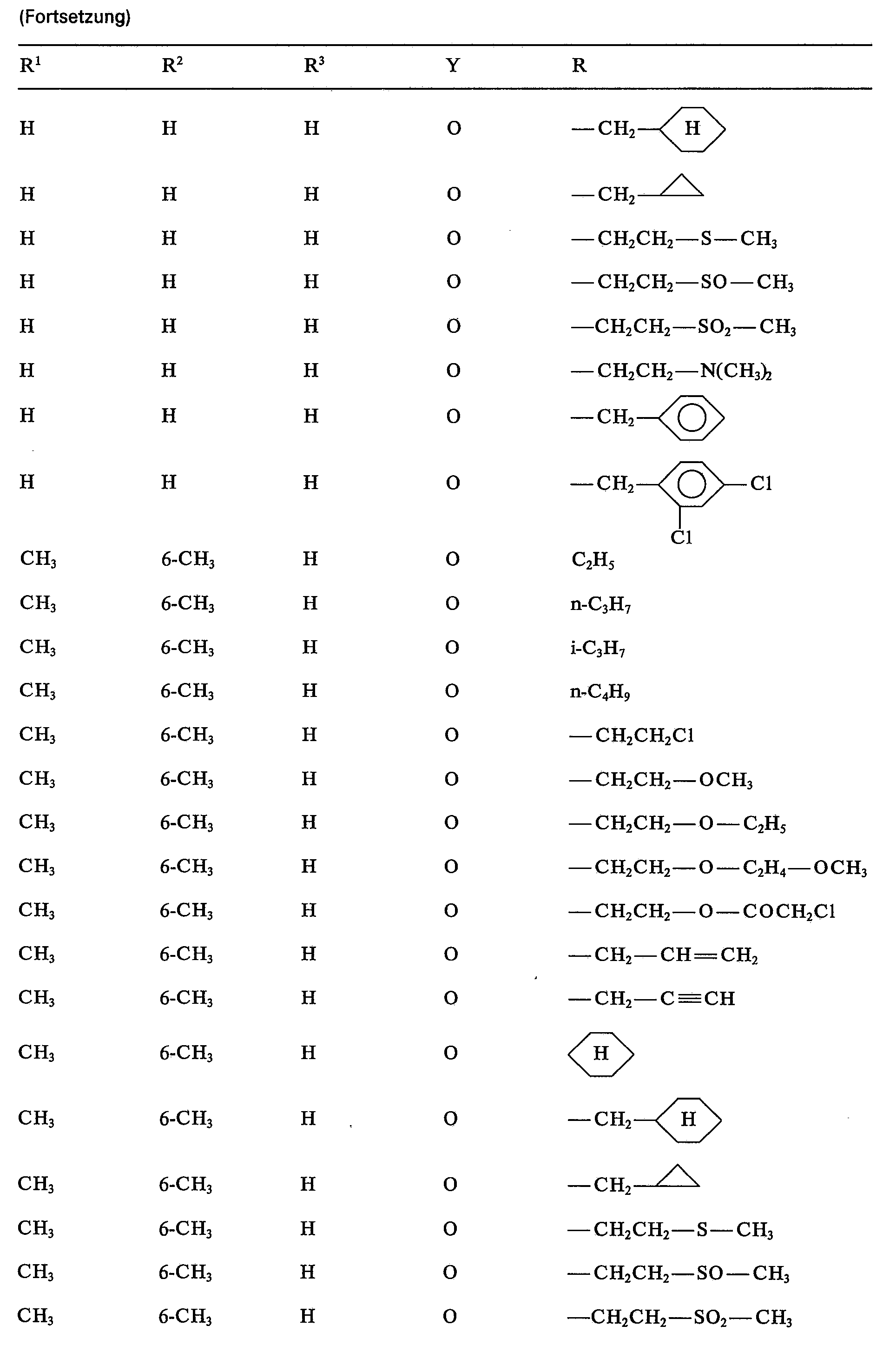

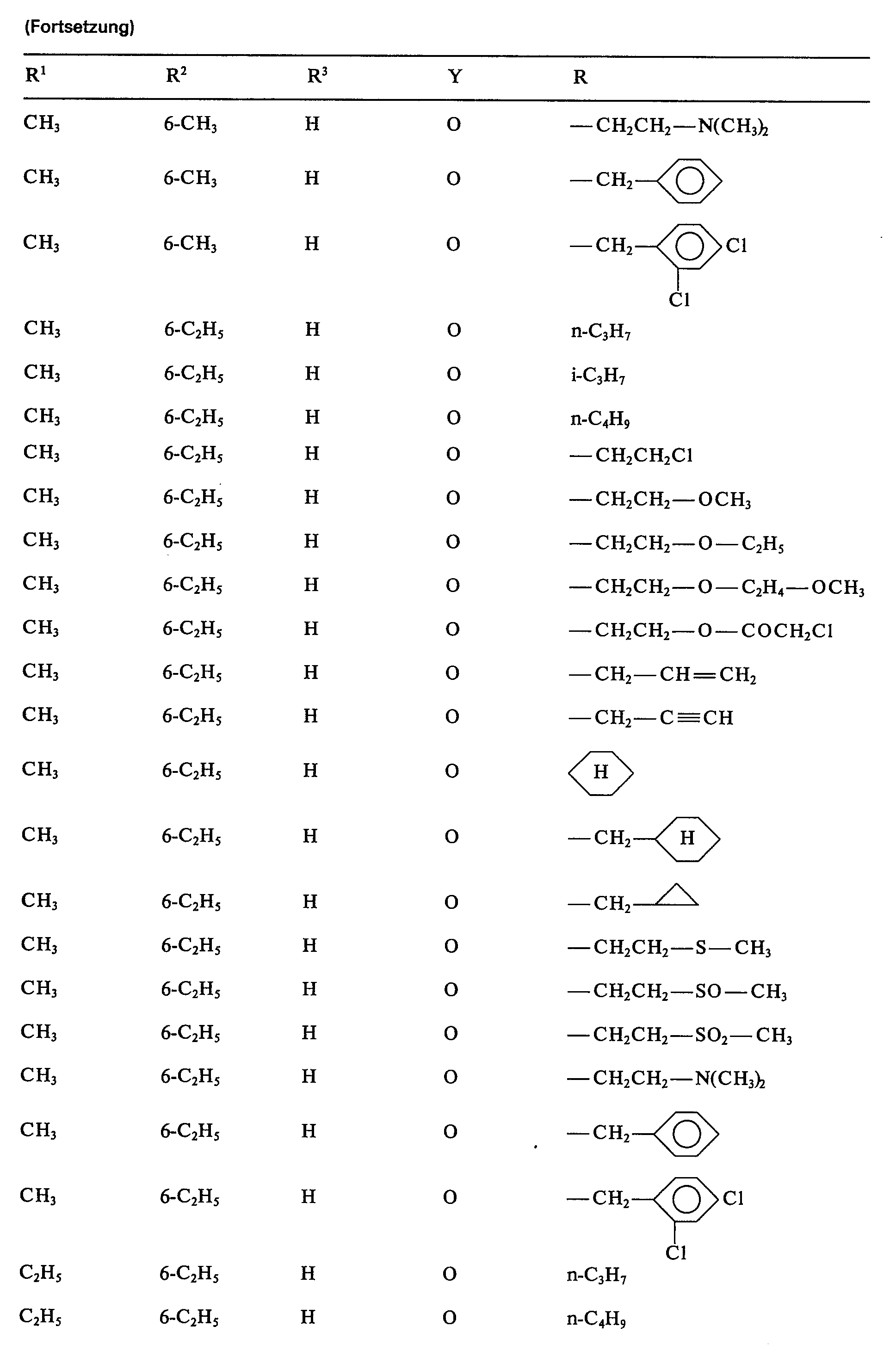

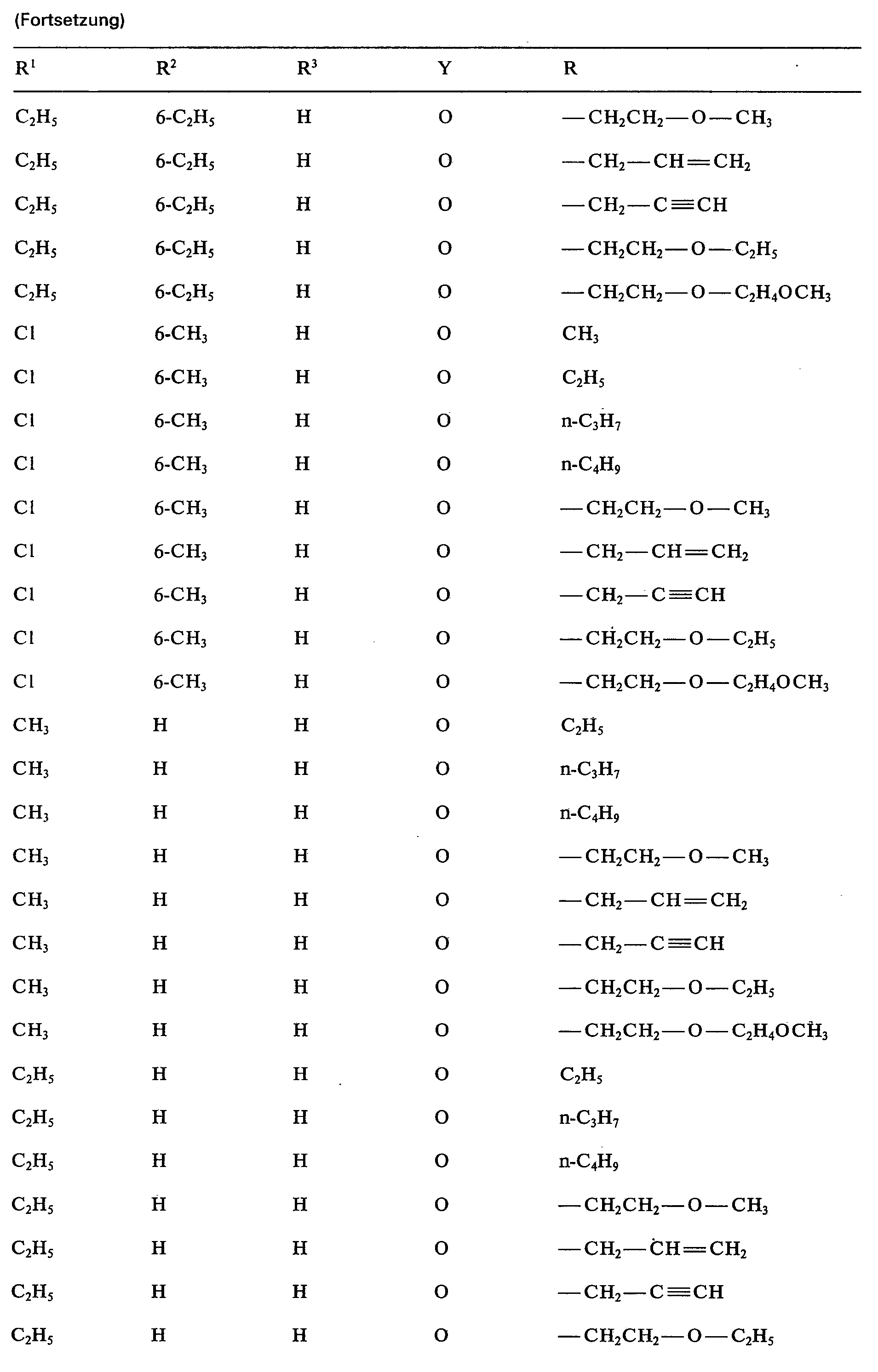

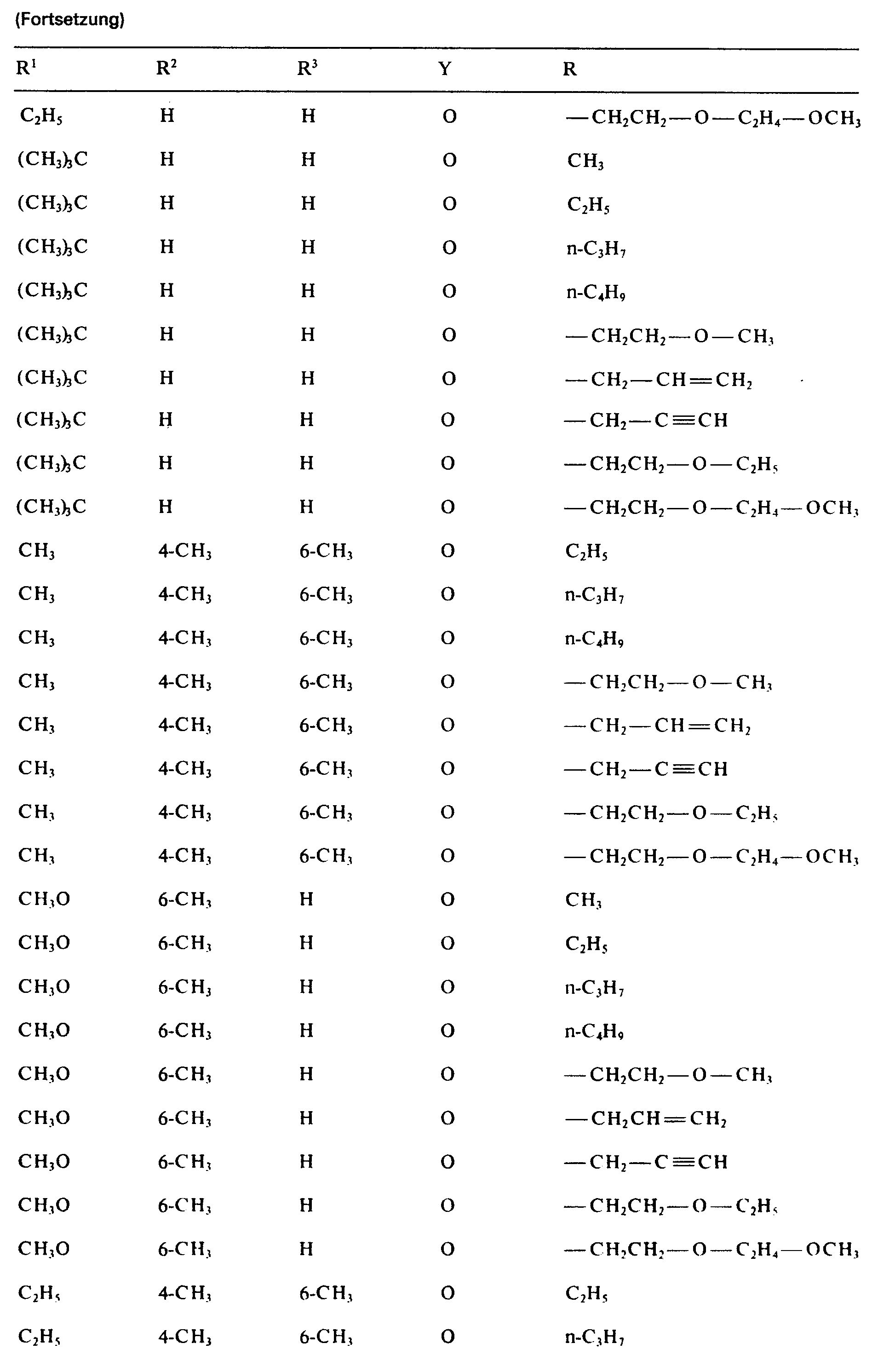

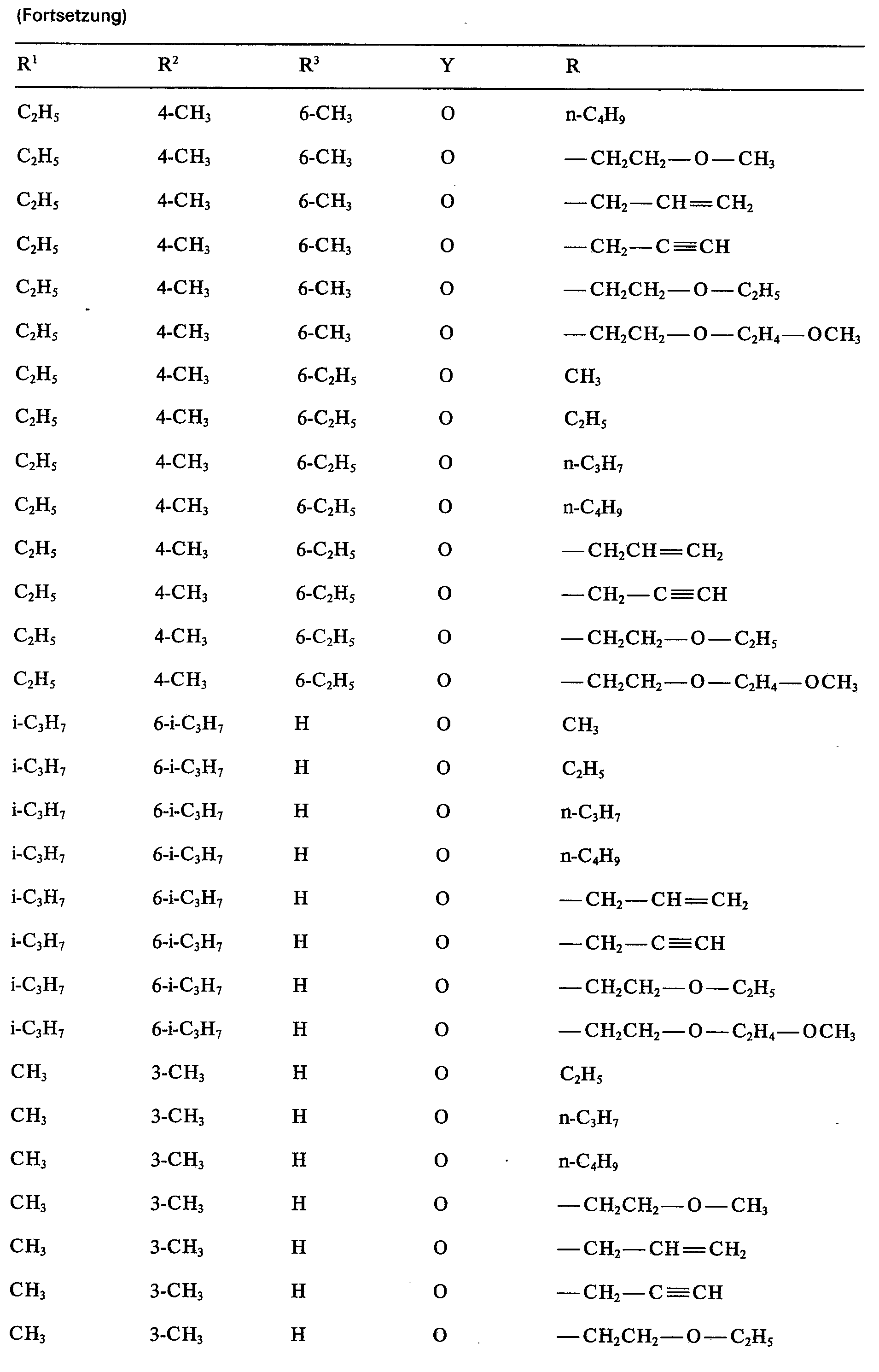

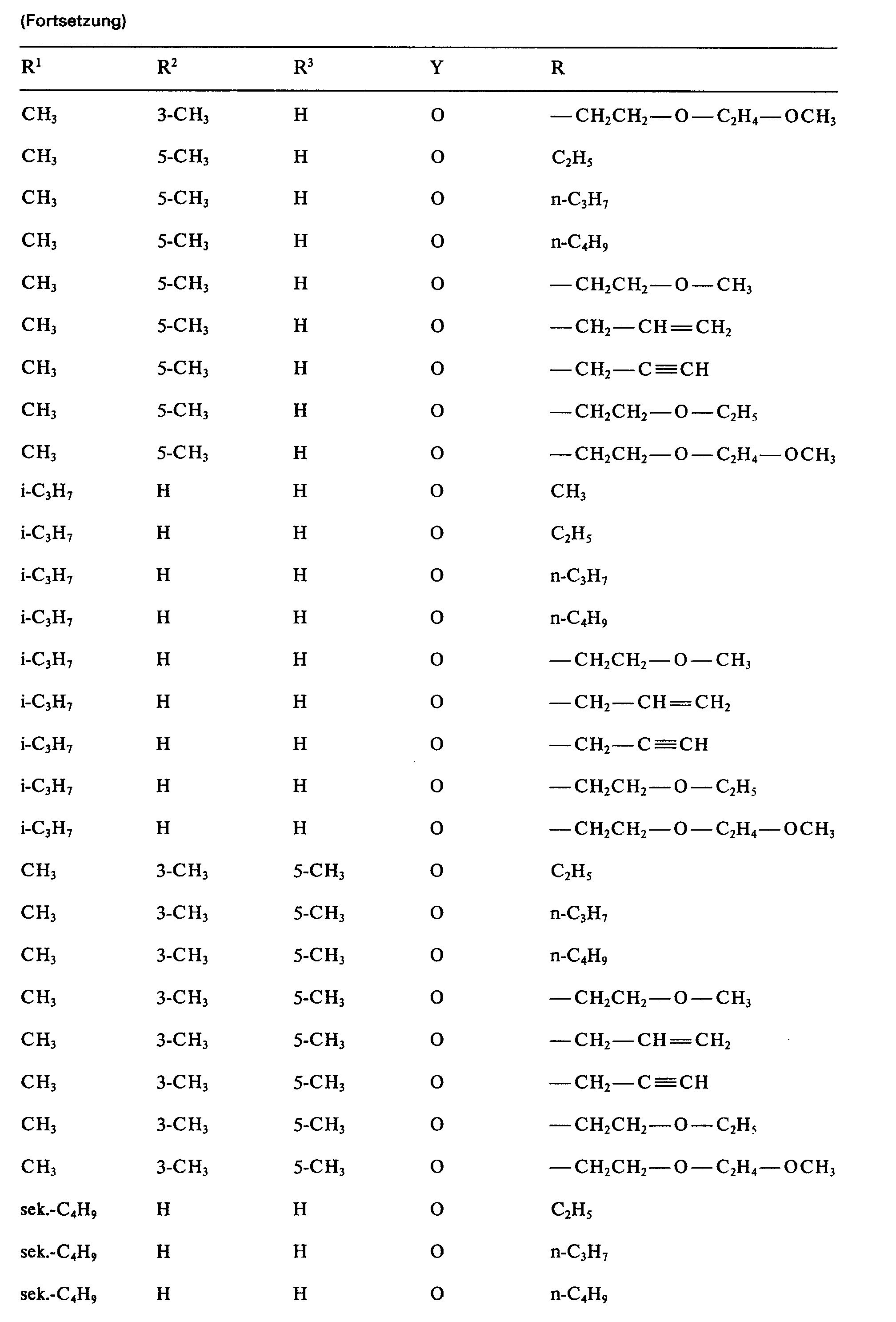

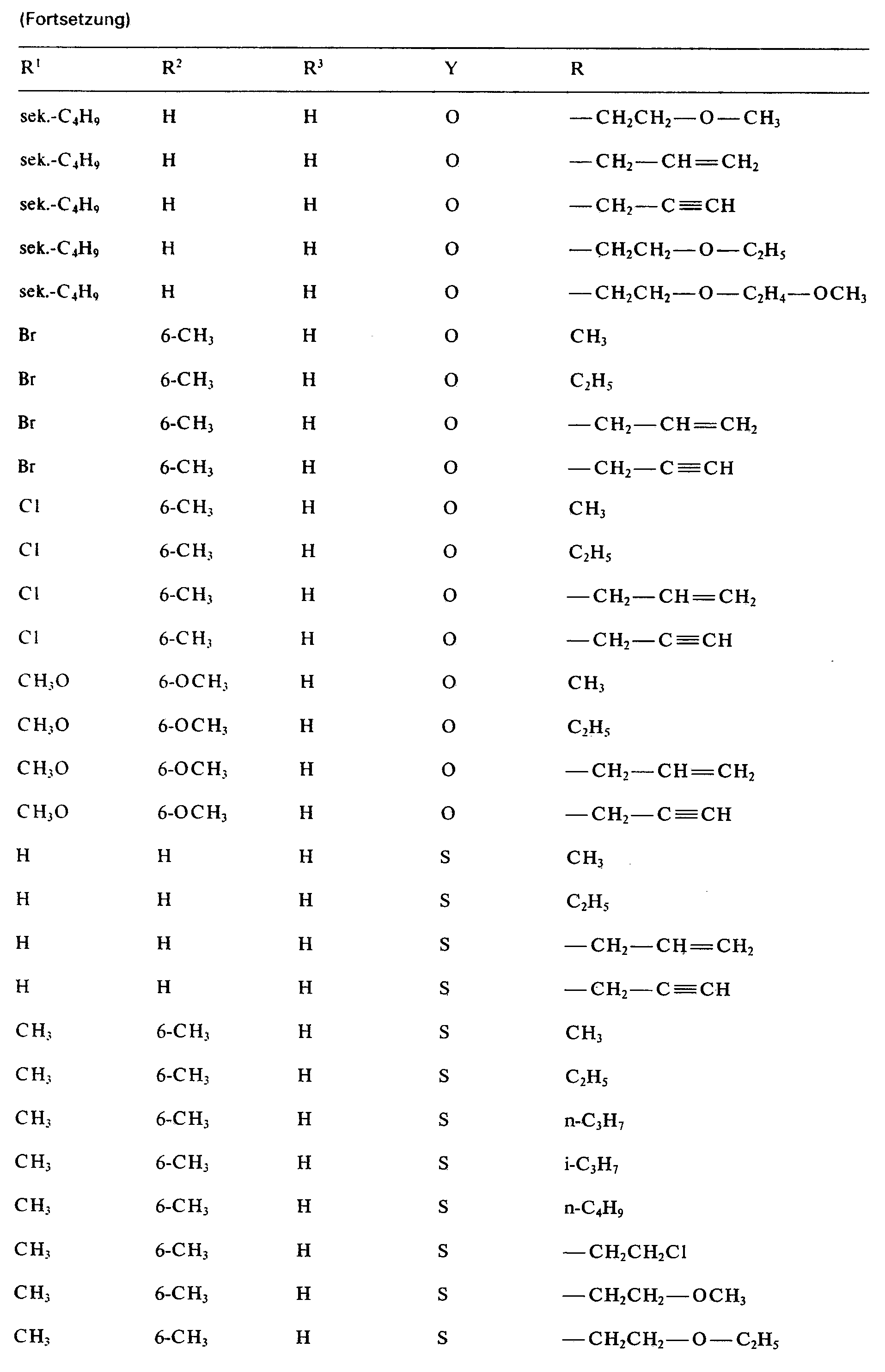

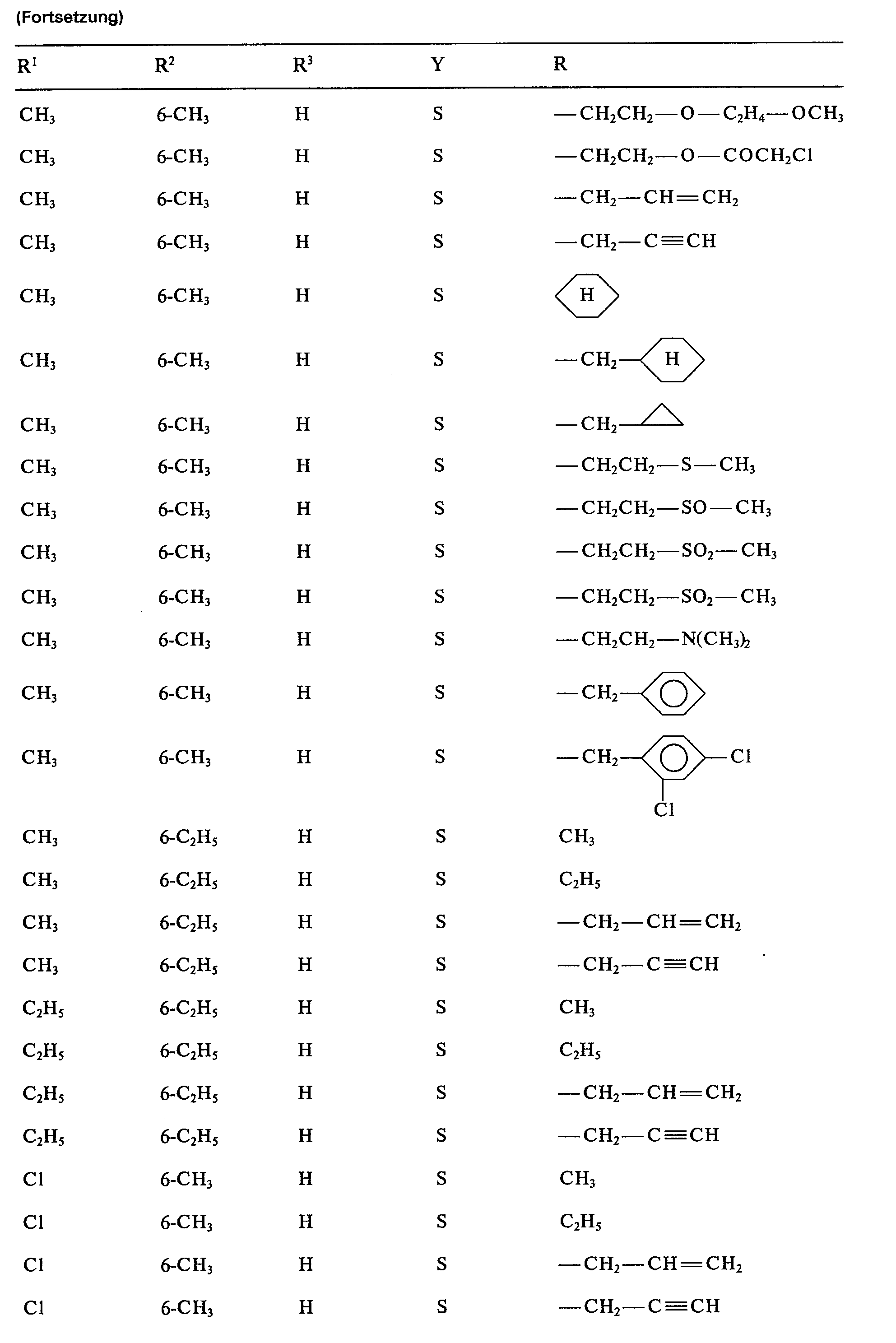

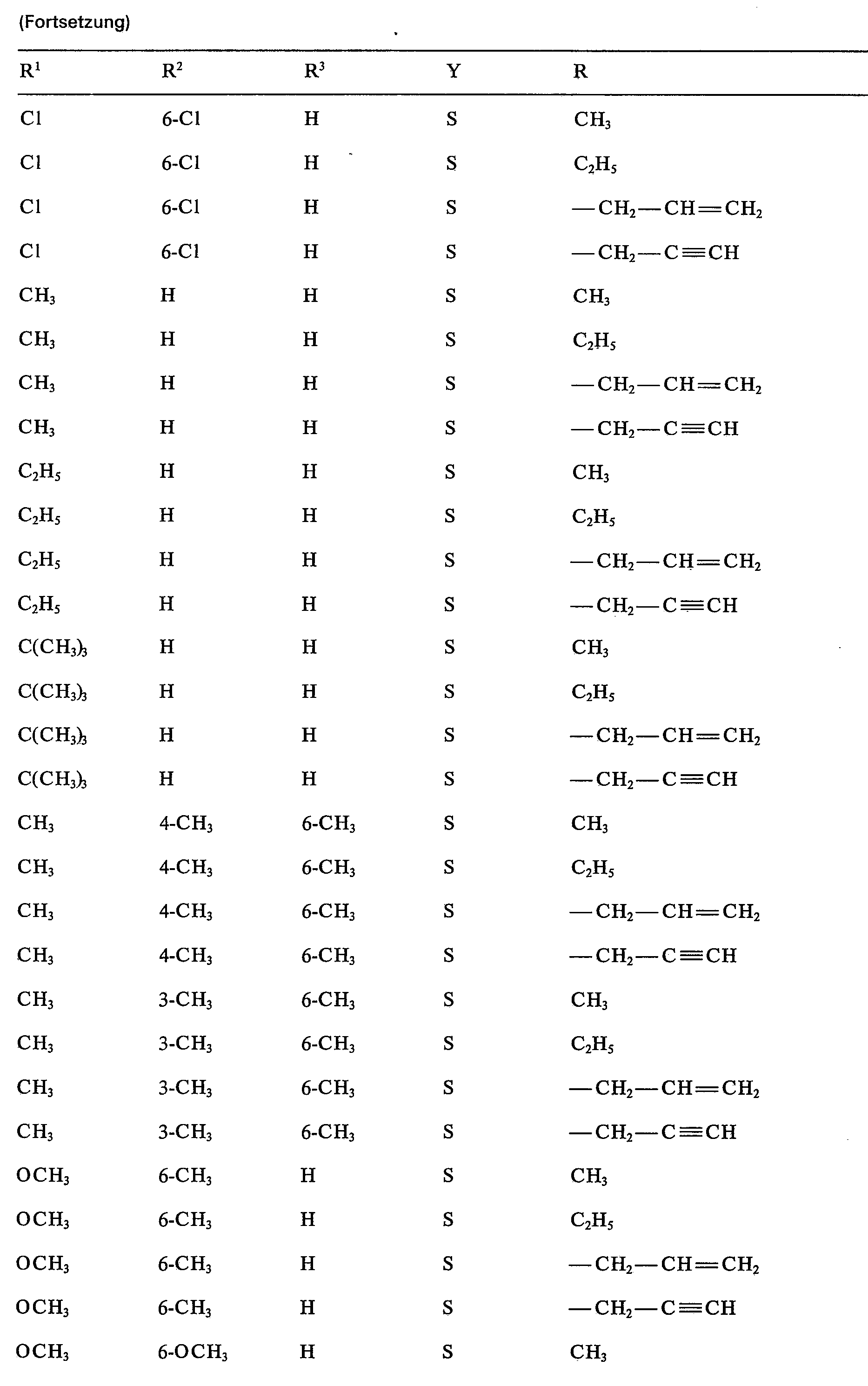

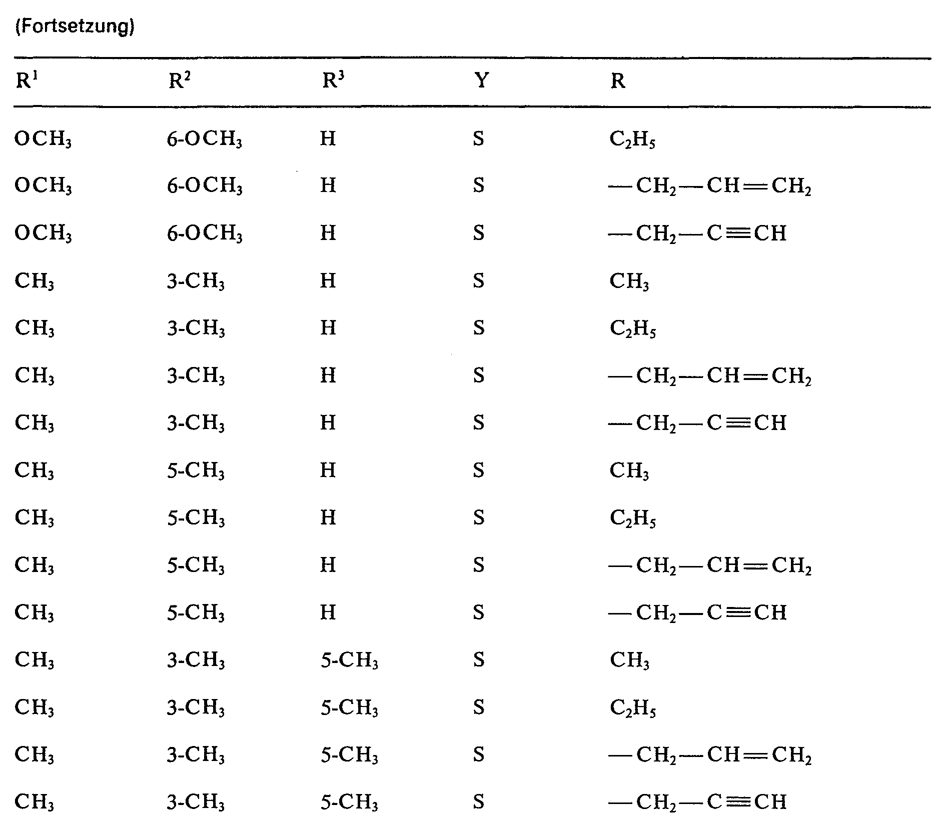

Verwendet man beispielsweise N-(2,6-Xylyl)-alaninmethylester und Dichloracetylchlorid als Ausgangsstoffe, so kann der Reaktionsablauf durch das folgende Formelschema wiedergegeben werden (Verfahrensvariante a):

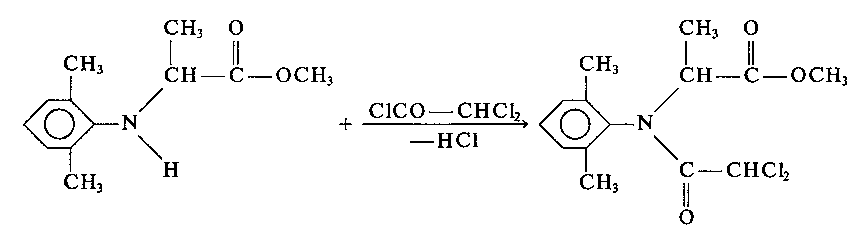

Verwendet man N-Dichloracetyl-N-(2,6-dimethylphenyl)-alanin und Propargylalkohol alsAusgangsstoffe und DCC^{*}) als Kondensationsmittel, so kann der Reaktionsablauf durch das folgende Formelschema wiedergegeben werden (Verfahrensvariante b): 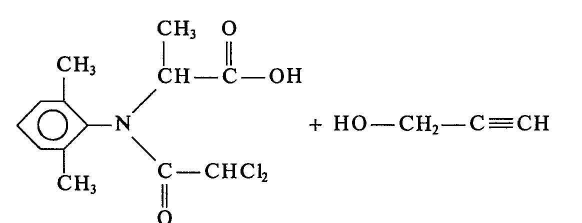 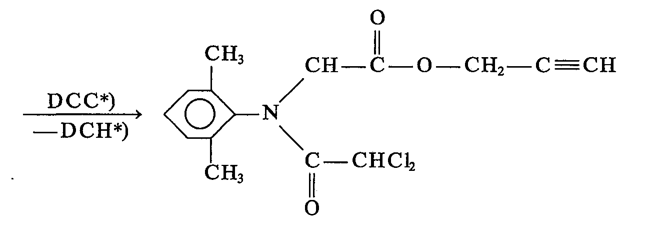
^{*}) DCC = Dicyclohexylcarbodiimid.
DCH = Dicyclohexylharnstoff.

Verwendet man N-Dichloracetyl-N-(2,6-dimethylphenyl)-alaninchlorid und O-Methylglykol als Ausgangsstoffe, so kann der Reaktionsverlauf durch das folgende Formelschema wiedergegeben werden (Verfahrensvariante c):

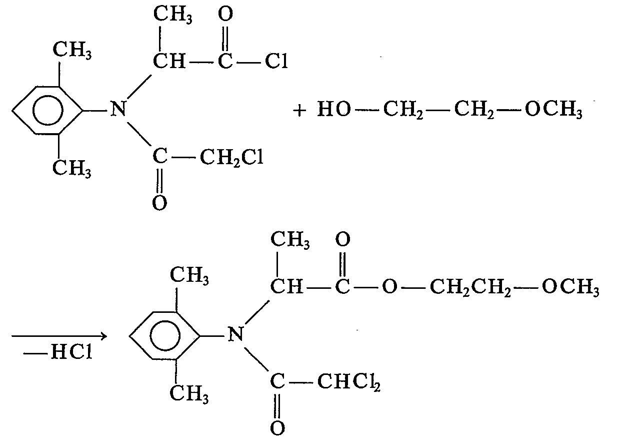

Die für die Verfahrensvariante (a) als Ausgangsstoffe zu verwendenden N-Phenyl-alanin(thio)ester sind durch die Formel (11) allgemein definiert. In dieser Formel stehen R, R¹, R², R³ und Y vorzugsweise für die Reste, die im Zusammenhang mit der Beschreibung der erfindungsgemäßen Stoffe der Formel (I) bereits vorzugsweise für diese Substituenten genannt wurden.

Die N-Phenyl-alanin(thio)ester der Formel (II) sind bekannt (vgl. unter anderem DE-OS 2 648 074 [LeA 17487] sowie US-Patentschrift 4096167). Noch nicht bekannte können nach den dort beschriebenen Verfahren erhalten werden, indem man z. B. entsprechende Aniline mit entsprechenden α-Halogenpropionsäure(thio)estern, wie beispielsweise α-Chlorpropionsäure(thio)estern, in Gegenwart eines Säurebindemittels, wie beispielsweise Kaliumcarbonat, und in Gegenwart eines inerten organischen Lösungsmittels, wie beispielsweise Dimethylformamid, und gegebenenfalls in Gegenwart eines Katalysators, wie z. B. Kaliumjodid, bei Temperaturen zwischen 20 und 160°C umsetzt.

Die N-Phenyl-alanin(thiol)ester der Formel (II) können auch erhalten werden, indem man N-Phenyl-alanine mit entsprechenden Alkoholen bzw. Thiolen nach bekannten Verfahren, z. B. in Gegenwart von Bortrifluorid, verestert [vgl. hierzu auch die Angaben für die Verfahrensvariante (b)].

Die außerdem für das erfindungsgemäße Verfahren (a) als Ausgangsstoffe zu verwendenden Dichloressigsäurechloride und -bromide bzw. -anhydride der Formeln (Illa) und (Illb) sind allgemein bekannte Verbindungen der organischen Chemie.

Die für die Verfahrensvariante (b) als Ausgangsstoffe zu verwendenden N-Dichloracetyl-N-phenyl-alanine sind durch die Formel (IV) allgemein definiert. In dieser Formel stehen R¹, R² und R³ vorzugsweise für die Reste, die im Zusammenhang mit der Beschreibung der erfindungsgemäßen Stoffe der Formel (I) bereits vorzugsweise für diese Substituenten genannt wurden.

Die N-Dichloracetyl-N-phenyl-alanine der Formel (IV) sind noch nicht bekannt. Sie können jedoch auf einfache Weise erhalten werden, indem man N-Phenyl-alanine mit Dichloracetylchlorid in Gegenwart eines Säurebindemittels, wie beispielsweise Natronlauge, und in Gegenwart eines inerten organischen Lösungsmittels, wie beispielsweise Methylenchlorid, bei Temperaturen zwischen 0 und 120° C umsetzt.

Die außerdem für die Verfahrensvarianten (b) und (c) als Ausgangsstoffe zu verwendenden Alkohole bzw. Thiole sind durch die Formel (V) allgemein definiert. In dieser Formel stehen R und Y vorzugsweise für die Reste, die im Zusammenhang mit der Beschreibung der erfindungsgemäßen Stoffe der Formel (I) bereits vorzugsweise für diese Substituenten genannt wurden.

Die Alkohole bzw. Thiole der Formel (V) sind allgemein bekannte Verbindungen der organischen Chemie.

Die für die Verfahrensvariante (c) als Ausgangsstoffe zu verwendenden N-Dichloracetyl-N-phenyl-alaninchloride sind durch die Formel (VI) allgemein definiert. In dieser Formel stehen R¹, R² und R³ vorzugsweise für die Reste, die im Zusammenhang mit der Beschreibung der erfindungsgemäßen Stoffe der Formel (I) bereits vorzugsweise für diese Substituenten genannt wurden.

Die N-Dichloracetyl-N-phenyl-alaninchloride der Formel (VI) sind noch nicht bekannt. Sie können jedoch auf einfache Weise erhalten werden, indem man die N-Dichloracetyl-N-phenyl-alanine der Formel (IV) vorzugsweise mit Oxalylchlorid in Gegenwart von Dimethylformamid oder Pyridin umsetzt.

Bevorzugte Lösungsmittel für die Reaktion gemäß Verfahrensvariante (a) sind inerte organische Lösungsmittel. Vorzugsweise werden verwendet Ketone, wie Diäthylketon, und insbesondere Azeton und Methylethylketon; Nitrile, wie Propionitril und insbesondere Acetonitril; Ether, wie Tetrahydrofuran oder Dioxan; aliphatische und aromatische Kohlenwasserstoffe, wie Petrolether, Benzol, Toluol oder Xylol; halogenierte Kohlenwasserstoffe, wie Methylenchlorid, Tetrachlorkohlenstoff, Chloroform oder Chlorbenzol; und Ester, wie Ethylazetat.

Das erfindungsgemäße Verfahren (a) kann gegebenenfalls in Gegenwart von Säurebindern [Chlor(Brom)wasserstoff-Akzeptoren] durchgeführt werden; als solche können alle üblichen Säurebindemittel verwendet werden. Hierzu gehören organische Basen, vorzugsweise tertiäre Amine, wie z. B. Triethylamin; ferner anorganische Basen, wie z. B. Alkalihydroxide und Alkalicarbonate. Als Katalysator kommt insbesondere Dimethylformamid in Betracht.

Die Reaktionstemperaturen können bei der Durchführung des erfindungsgemäßen Verfahrens (a) in einem größeren Bereich variiert werden. Im allgemeinen arbeitet man zwischen 0 und 120°C, vorzugsweise zwischen 20 und 100° C.

Bei der Durchführung des erfindungsgemäßen Verfahrens (a) setzt man vorzugsweise auf 1 Mol der Verbindungen der Formel (11), wenn R nicht für Hydroxyalkyl steht, 1 bis 1,5 Mol Dichloracetylierungsmittel und gegebenenfalls 1 bis 1,5 Mol Säurebinder ein.

Wenn jedoch in diesen Ausgangsverbindungen R für Hydroxyalkyl steht, setzt man auf 1 Mol dieser Verbindungen 2 bis 2,5 Mol Dichloracetylierungsmittel und gegebenenfalls 2 bis 2,5 Mol Säurebinder ein. Die Isolierung der Verbindungen der Formel (I) erfolgt in üblicher Weise.

Als Lösungsmittel kommen für die erfindungsgemäße Umsetzung gemäß Verfahrensvariante (b) vorzugsweise inerte organische Lösungsmittel in Frage. Hierzu gehören vorzugsweise aromatische Kohlenwasserstoffe, wie Benzol, Tol'uol oder Xylol; halogenierte Kohlenwasserstoffe, wie Chloroform oder 1,2-Dichlorethan sowie die als Reaktionskomponente verwendeten Alkohole (Thiole) selbst.

Das erfindungsgemäße Verfahren (b) wird in Gegenwart eines Kondensationsmittels durchgeführt; als solche können alle üblichen Kondensationsmittel verwendet werden, wie insbesondere Dicyclohexylcarbodiimid (DCC), Chlorameisensäureethylester oder Benzolsulfochlorid.

Die Reaktionstemperaturen können bei der Durchführung des erfindungsgemäßen Verfahrens (b) in einem größeren Bereich variiert werden. Im allgemeinen arbeitet man zwischen 0 und 150°C, vorzugsweise zwischen 20 und 100° C, bzw. bei der Siedetemperatur des verwendeten Lösungsmittels.

Bei der Durchführung des erfindungsgemäßen Verfahrens (b) setzt man vorzugsweise auf 1 Mol der Verbindungen der Formel (IV) 2 bis 8 Mol Alkohol (Thiol) und 1 bis 2 Mol an Kondensationsmittel ein. Die Isolierung der Verbindungen der Formel (I) erfolgt in üblicher Weise.

Als Lösungsmittel kommen für die erfindungsgemäße Umsetzung gemäß Verfahrensvariante (c) vorzugsweise inerte organische Lösungsmittel in Frage. Hierzu gehören vorzugsweise die bei Verfahrensvariante (a) bereits vorzugsweise genannten Solventien.

Die Reaktionstemperaturen können bei der Durchführung der Verfahrensvariante (c) in einem größeren Bereich variiert werden. Im allgemeinen arbeitet man zwischen 0 und 120°C, vorzugsweise zwischen 20 und 100° C, bzw. beim Siedepunkt des jeweiligen Lösungsmittels.

Bei der Durchführung der Verfahrensvariante (c) arbeitet man vorzugsweise in molaren Mengen. Die Isolierung der Verbindungen der Formel (I) erfolgt in üblicher Weise.

Die erfindungsgemäßen Wirkstoffe weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz-und Saatgut und des Bodens.

Als Pflanzenschutzmittel können die erfindungsgemäßen Wirkstoffe mit besonders gutem Erfolg zur Bekämpfung von Oomyceten, z. B. gegen den Erreger der Kraut- und Braunfäule der Tomate und Kartoffel (Phytophthora infestans) eingesetzt werden. Besonders hervorzuheben ist, daß die erfindungsgemäßen Wirkstoffe nicht nur eine protektive, sondern auch eine kurativ/eradikative Wirkung entfalten. Außerdem besitzen sie systemische Eigenschaften. So gelingt es, Pflanzen gegen Pilzbefall zu schützen, wenn man den Wirkstoff über den Boden und die Wurzel oder über das Saatgut den oberirdischen Teilen der Pflanze zuführt.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und -Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden, verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z. B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe, sowie Butan, Propan, Stickstoff und Kohlendioxid; als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z. B. nichtionogene und anionische Emulgatoren, wie Polyoxyäthylen-Fettsäure-Ester, Polyoxyäthylen-Fettalkohol-Äther, z. B. Alkylarylpolyglykol-äther, Alkylsulfonate, Alkylsulfate, Arylsulfonate sowie Eiweißhydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäßen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z. B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001%.

Bei der Saatgutbehandlung werden im allgemeinen Wirkstoffmengen von 0,001 bis 50g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02%, am Wirkungsort erforderlich.

In den nachfolgenden Beispielen werden die nachstehend angegebenen Verbindungen als Vergleichssubstanzen eingesetzt: 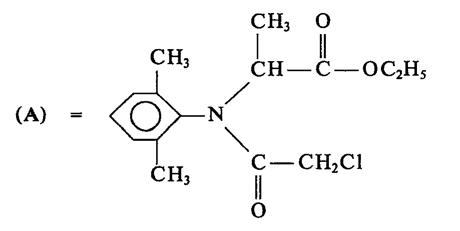 N-Chloracetyl-N-(2,6-xylyl)-alaninethylester 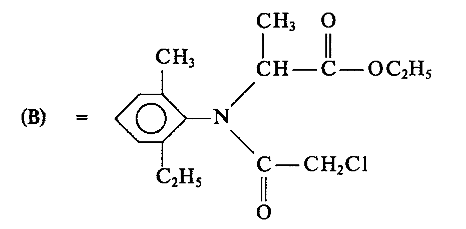 N-Chloracetyl-N-(2-ethyl-6-methylphenyl)-alaninethylester

### Beispiel A

### Phytophthora-Test (Tomaten)/Protektiv

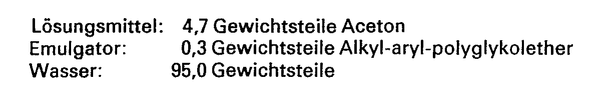

Man vermischt die für die gewünschte Wirkstoffkonzentration in der Spritzflüssigkeit nötige Wirkstoffmenge mit der angegebenen Menge des Lösungsmittels und verdünnt das Konzentrat mit der angegebenen Menge Wasser, welches die genannten Zusätze enthält.

Mit der Spritzflüssigkeit bespritzt man junge Tomatenpflanzen mit 2 bis 4 Laubblättern bis zur Tropfnässe. Die Pflanzen verbleiben 24 Stunden bei 20°C und einer relativen Luftfeuchtigkeit von 70% im Gewächshaus. Anschließend werden die Tomatenpflanzen mit einer wäßrigen Sporensuspension von Phytophthora infestans inokuliert. Die Pflanzen werden in eine Feuchtkammer mit einer 100%igen Luftfeuchtigkeit und einer Temperatur von 18 bis 20° C gebracht.

Nach 5 Tagen wird der Befall der Tomatenpflanzen bestimmt. Die erhaltenen Boniturwerte werden auf Prozent Befall umgerechnet. 0% bedeutet keinen Befall, 100% bedeutet, daß die Pflanzen vollständig befallen sind.

In diesem Test zeigen z. B. folgende Verbindungen eine sehr gute Wirkung, die derjenigen der aus dem Stand der Technik bekannten Verbindung (A) deutlich überlegen ist:
Verbindungen gemäß Herstellungsbeispielen 1,2,12 und 16.

### Beispiel B

### Phytophthora-Test (Tomaten)/Systemisch

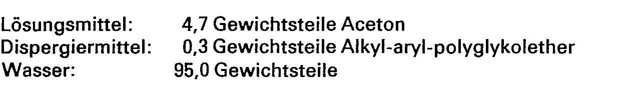

Man vermischt die für die gewünschte Wirkstoffkonzentration in der Gießflüssigkeit nötige Wirkstoffmenge mit der angegebenen Menge des Lösungsmittels und verdünnt das Konzentrat mit der angegebenen Menge Wasser, welches die genannten Zusätze enthält.

In Einheitserde angezogene Tomatenpflanzen mit 2 bis 4 Laubblättern werden mit 10m) der Gießflüssigkeit in der angegebenen Wirkstoffkonzentration, bezogen auf 100 ml Erde, gegossen.

Die so behandelten Pflanzen werden nach der Behandlung mit einer wäßrigen Sporensuspension von Phytophthora infestans inokuliert. Die Pflanzen werden in eine Feuchtkammer mit einer Luftfeuchtigkeit von 100% und einer Temperatur von 18 bis 20° C gebracht. Nach 5 Tagen wird der Befall der Tomatenpflanzen bestimmt. Die so erhaltenen Boniturwerte werden auf Prozent Befall umgerechnet. 0% bedeutet keinen Befall, 100% bedeutet, daß die Pflanzen vollständig befallen sind.

In diesem Test zeigen z. B. folgende Verbindungen eine sehr gute Wirkung, die derjenigen der aus dem Stand der Technik bekannten Verbindung (B) deutlich überlegen ist:
Verbindungen gemäß Herstellungsbeispielen 1,4 und 16.

### Herstellungsbeispiele

### Beispiel 1

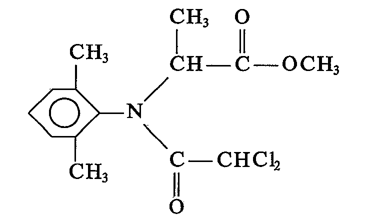

Zu einer Lösung von 21,8 g (0,1 Mol) 95%igem N-(2,6-Xylyl)-alaninmethylester in 100 ml Toluol gibt man einige Tropfen Dimethylformamid und tropft bei Raumtemperatur in 20 Minuten 16,6 g (0,11 Mol) 98%iges Dichloracetylchlorid zu. Anschließend wird 2 Stunden bei 80° C gerührt. Nach Abkühlung wird mit 100 ml Essigester verdünnt, mit verdünnter Salzsäure, Wasser und Natriumhydrogencarbonat-Lösung gewaschen, über Natriumsulfat getrocknet, eingedampft und aus Ligroin umkristallisiert. Man erhält 26,3 g (82,6% der Theorie) N-Dichloracetyl-N-(2,6-xylyl)-alaninmethylester vom Schmelzpunkt 119 -119,5° C.

Analog werden die nachfolgenden Verbindungen der allgemeinen Formel 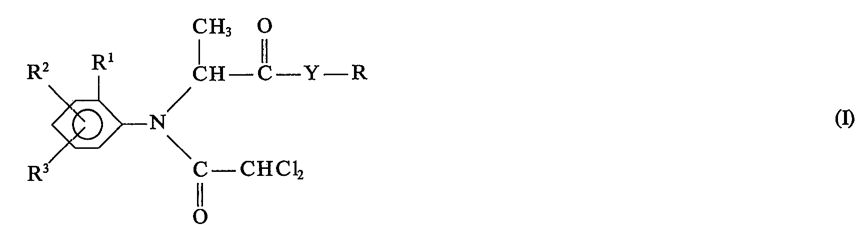 erhalten:

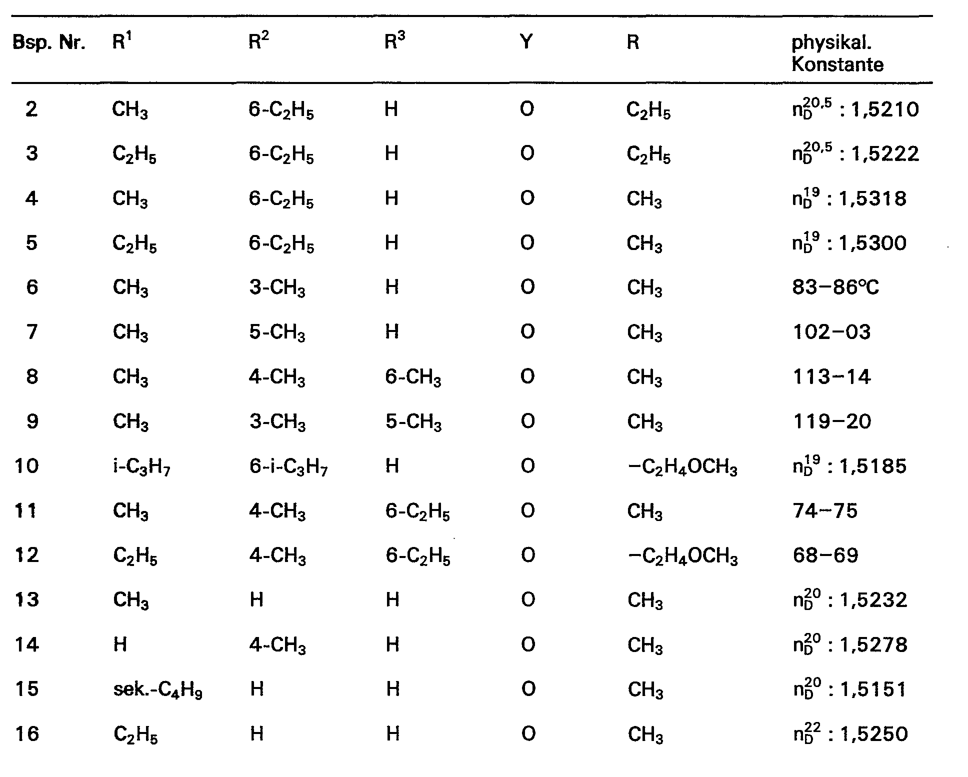

## Patentansprüche

1. N-Dichloracetyl-N-phenyl-alanin(thiol)ester der allgemeinen Formel 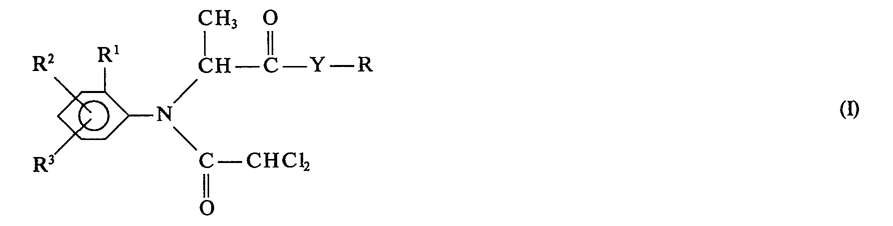 in welcher
R für Alkyl, Hydroxyalkyl, Cyanalkyl, Alkenyl, Alkinyl, Halogenalkyl, Cycloalkyl, Cycloalkylalkyl, Alkoxyalkyl, Alkoxyalkoxyalkyl, Acyloxyalkyl, Alkylthioalkyl, Alkylsulfinylalkyl, Alkylsulfonylalkyl, Dialkylaminoalkyl oder gegebenenfalls durch Halogen, Cyano, Nitro, Alkyl sowie Halogenalkyl substituiertes Aralkyl steht,
R¹ für Wasserstoff, Alkyl, Alkoxy oder Halogen steht,
R² für Wasserstoff, Alkyl, Alkoxy oder Halogen steht,
R³ für Wasserstoff oder Alkyl steht und
Y für Sauerstoff oder Schwefel steht.

2. Verfahren zur Herstellung von N-Dichloracetyl-N-phenyl-alanin(thiol)estern, dadurch gekennzeichnet, daß man
a) N-Phenyl-alanin(thiol)ester der Formel 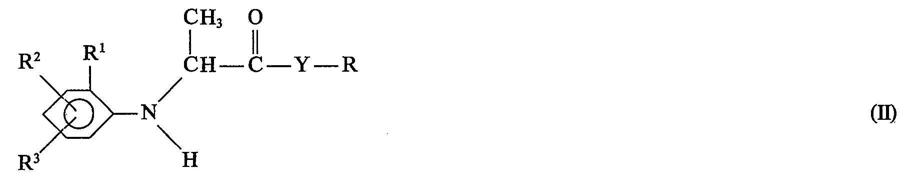 in welcher
R, R¹, R², R³ und Y die oben angegebene Bedeutung haben,
mit Dichloressigsäurechloriden oder -bromiden bzw. -anhydriden der Formeln 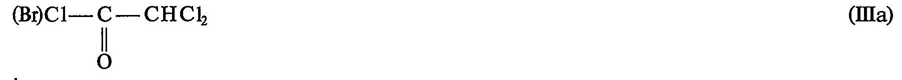 bzw. 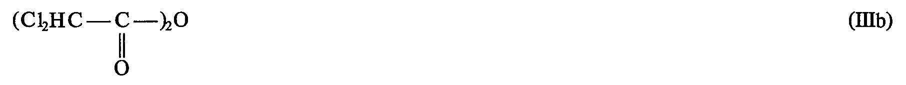 in Gegenwart eines Verdünnungsmittels und gegebenenfalls in Gegenwart eines Säurebindemittels umsetzt, oder
b) N-Dichloracetyl-N-phenyl-alanine der Formel 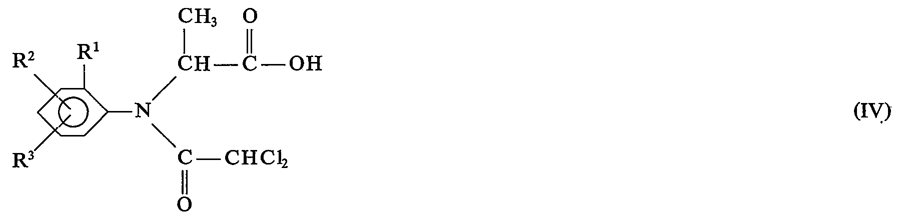 in welcher
R¹, R² und R³ die oben angegebene Bedeutung haben,
mit Alkoholen bzw. Thiolen der Formel 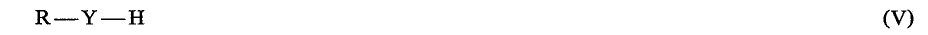 in welcher
R und Y die oben angegebene Bedeutung haben,
in Gegenwart eines Kondensationsmittels und gegebenenfalls in Gegenwart eines Verdünnungsmittels umsetzt, oder
c) N-Dichloracetyl-N-phenyl-alaninchloride der Formel 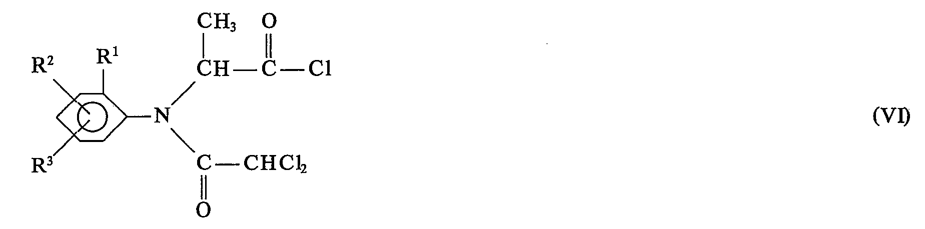 in welcher
R¹, R² und R³ die oben angegebene Bedeutung haben,
mit Alkoholen bzw. Thiolen der Formel (V) in Gegenwart eines Verdünnungsmittels und gegebenenfalls in Gegenwart einer Base umsetzt.

3. Fungizide Mittel, gekennzeichnet durch einen Gehalt an mindestens einem N-Dichloracetyl-N-phenyl-alanin(thiol)ester der Formel I.

4. Verfahren zur Bekämpfung von Pilzen, dadurch gekennzeichnet, daß man N-Dichloracetyl-N-phenyl-alanin(thiol)ester der Formel auf Pilze oder ihren Lebensraum einwirken läßt.

5. Verwendung von N-Dichloracetyl-N-phenyl-alanin(thiol)estern der Formel zur Bekämpfung von Pilzen.

6. Verfahren zur Herstellung von fungiziden Mitteln, dadurch gekennzeichnet, daß man N-Dichloracetyl-N-phenyl-alanin(thiol)ester der Formel 1 mit Streckmitteln und/oder oberflächenaktiven Mitteln vermischt.

## Claims

1. N-Dichloroacetyl-N-phenyl-alanine (thiol)esters of the general formula 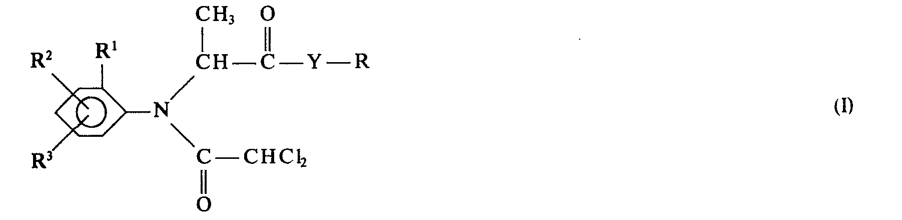 in which
R represents alkyl, hydroxyalkyl, cyanoalkyl, alenyl, alkinyl, halogenalkyl, cycloalkyl, cycloalkylalkyl, alkoxyalkyl, alkoxyalkoxyalkyl, acyloxyalkyl, alkylthioalkyl, alkylsulphinylalkyl, alkylsulphonyl- alkyl, dialkylaminoalkyl or aralkyl which is optionally substituted by halogen, cyano, nitro, alkyl or halogenoalkyl,
R¹ represents hydrogen, alkyl, alkoxy or halogen,
R² represents hydrogen, alkyl, alkoxy or halogen,
R³ represents hydrogen or alkyl and
Y represents oxygen or sulphur.

2. Process for the preparation of N-dichloroacetyl-N-phenyl-alanine (thiol)esters, characterised in that
a) N-phenyl-alanine (thiol)esters of the formula 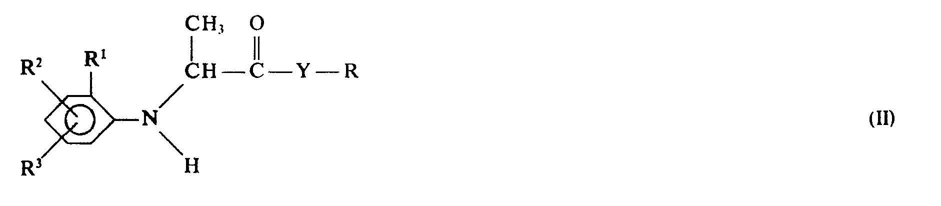 in which
R, R¹, R², R³ and Y have the meaning indicated above,
are reacted with dichloroacetic acid chlorides, bromides or anhydrides of the formulae 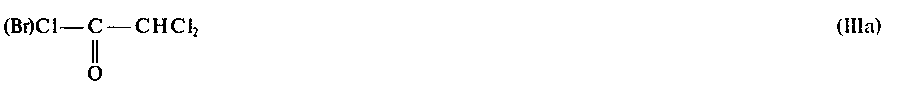 or 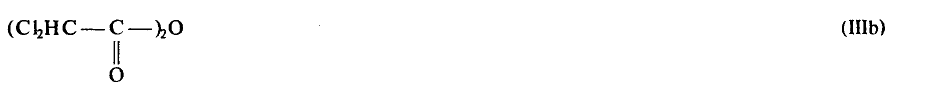 in the presence of a diluent and if appropriate in the presence of an acid-bindung agent, or
b) N-dichloroacetyl-N-phenyl-alanines of the formula 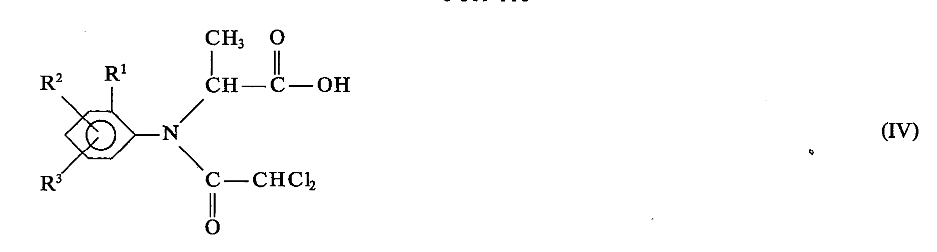 in which
R¹, R² and R³ have the meaning indicated above, are reacted with alcohols or thiols of the formula 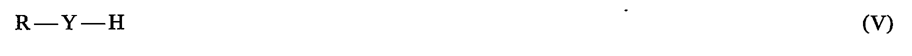 in which
R and Y have the meaning indicated above,
in the presence of a condensing agent and if appropriate in the presence of a diluent, or
c) N-dichloroacetyl-N-phenyl-alanine chlorides of the formula 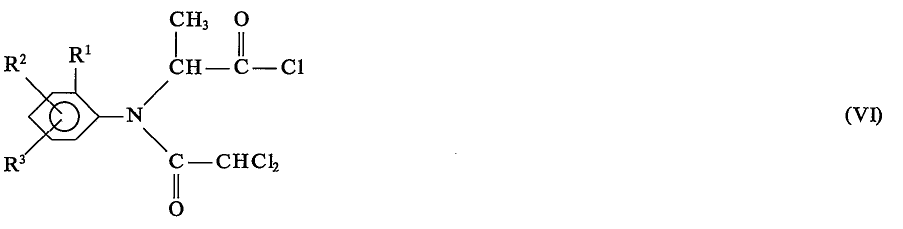 in which
R¹, R² and R³ have the meaning indicated above,
are reacted with alcohols or thiols of the formula (V) in the presence of a diluent and if appropriate in the presence of a base.

3. Fungicidal agents, characterised in that they contain at least one N-dichloroacetyl-N-phenyl-alanine (thiol)ester of the formula I.

4. Process for combating fungi, characterised in that N-dichloroacetyl-N-phenyl-alanine (thiol)esters of the formula I are allowed to act on fungi or their environment.

5. Use of N-dichloroacetyl-N-phenyl-alanine (thiol)esters of the formula I for combating fungi.

6. Process for the preparation of fungicidal agents, characterised in that N-dichloroacetyl-N-phenyl-alanine (thiol)esters of the formula I are mixed with extenders and/or surface-active agents.

## Revendications

1. (Thioi)esters de N-dichloracétyl-N-phényl-alanines de formule générale 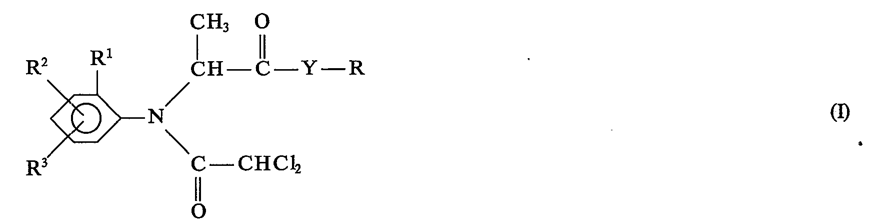 dans laquelle
R représente un groupe alkyle, hydroxyalkyle, cyanalkyle, alcényle, alcynyle, halogénoalkyle, cycloalkyle, cycloalkylalkyle, alcoxyalkyle, alcoxyalcoxyalkyle, acyloxyalkyle, alkylthioalkyle, alkylsulfinylalkyle, alkylsulfonylalkyle, dialkylaminoalkyle ou aralkyle éventuellement substitué par des halogènes, des groupes cyano, nitro, alkyle ou halogénoalkyle,
R^{I} représente l'hydrogène, un groupe alkyle, alcoxy ou un halogène,
R² représente l'hydrogène, un groupe alkyle, alcoxy ou un halogène,
R³ représente l'hydrogène ou un groupe alkyle, et
Y représente l'oxygène ou le soufre.

2. Procédé de préparation de (thiol)esters de N-dichloracétyl-N-phényl-alanines, caractérisé en ce que l'on fait réagir des (thiol)esters de
a) N-phényl-alanines de formule 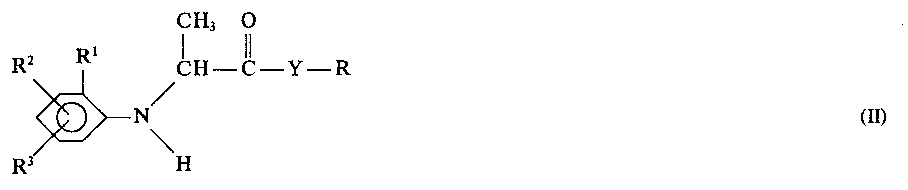 dans laquelle R, R¹, R², R³ et Y ont les significations indiqueés ci-dessus avec un chlorure ou bromure ou anhydride de l'acide dichloracétique, répondant aux formules respectives 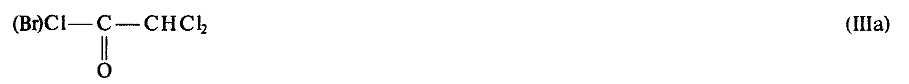 et 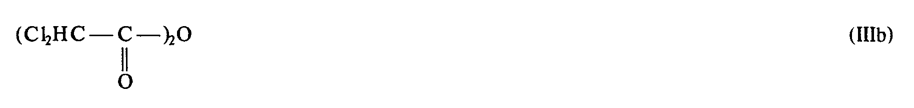 en présence d'un diluant et le cas échéant en présence d'un agent fixant les acides ou bien
b) on fait réagir des N-dichloracétyl-N-phényl-alanines de formule 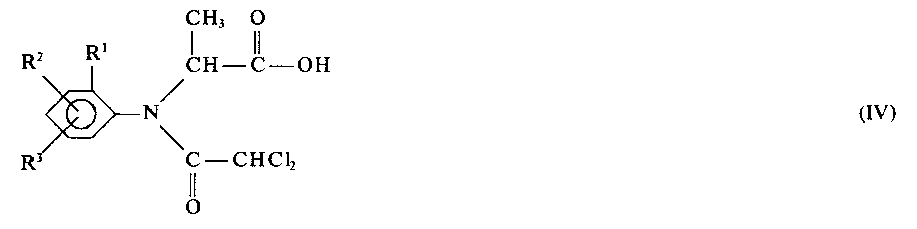 dans laquelle R¹, R² et R³ ont les significations indiquées ci-dessus, avec des alcools ou thiols respectivement de formule 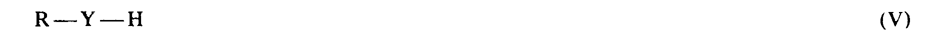 dans laquelle R et Y ont les significations indiquées ci-dessus, en présence d'un agent de condensation et le cas échéant en présence d'un diluant, ou bien
c) on fait réagir des chlorures de N-dichloracétyl-N-phényl-alanines de formule 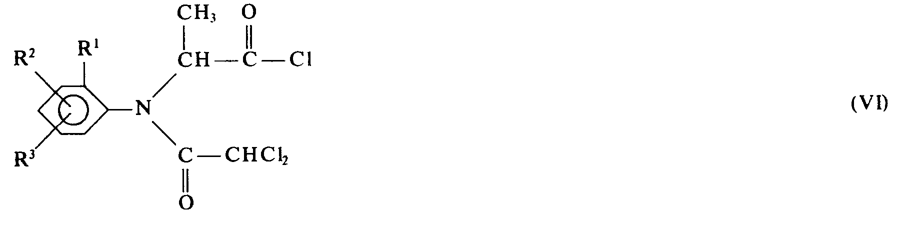 dans laquelle R¹, R² et R³ ont les significations indiquées ci-dessus avec des alcools ou thiols respectivement de formule V en présence d'un diluant et le cas échéant en présence d'une base.

3. Produit fongicide caractérisé en ce qu'il contient au moins un (thiol)ester de N-dichloracétyl-N-phényl-alanine de formule I.

4. Procédé pour combattre les mycètes, caractérisé en ce que l'on fait agir les (thiol)esters de N-dichloracétyl-N-phényl-alanines de formule I sur les mycètes ou leur habitat.

5. Utilisation des (thiol)esters de N-dichloracétyl-N-phényl-alanines de formule I dans la lutte contre les mycètes.

6. Procédé de préparation de produits gonficides, caractérisé en ce que l'on mélange des (thiol)esters de N-dichloracétyl-N-phényl-alanines de formule I avec des diluants et/ou des agents tensioactifs.
